(19) Europäisches Patentamt
European Patent Office
Office européen des brevets

(11) **EP 1 937 020 A2**

(12) **EUROPÄISCHE PATENTANMELDUNG**

(43) Veröffentlichungstag:
**25.06.2008 Patentblatt 2008/26**

(51) Int Cl.:
**H04Q 7/38** *(2006.01)*  **G08B 25/10** *(2006.01)*

(21) Anmeldenummer: **07024316.7**

(22) Anmeldetag: **14.12.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **18.12.2006 DE 102006059660**
**25.10.2007 DE 102007051140**

(71) Anmelder: **Björn Steiger Stiftung Service GmbH**
**70174 Stuttgart (DE)**

(72) Erfinder:
• **Jung, Peter, Prof. Dr.-Ing.**
**47051 Duisburg (DE)**
• **Waadt, Andreas, Dipl.-Ing.**
**47057 Duisburg (DE)**
• **Bruck, Guido, H., Dr.-Ing.**
**46562 Duisburg (DE)**

(74) Vertreter: **Zinkler, Franz et al**
**Schoppe, Zimmermann, Stöckeler & Zinkler**
**Postfach 246**
**82043 Pullach bei München (DE)**

(54) **Sende-/Empfangsvorrichtung und Verfahren zur notfallbasierten Kommunikation in einem Mobilfunknetz**

(57) Eine Sende-/Empfangsvorrichtung (100) zur Kommunikation in einem Mobilfunknetz. Die Sende-/Empfangsvorrichtung (100) umfasst eine Einrichtung (110) zum Erfassen von Signalen eines Senders des Mobilfunknetzes und wenigstens eines weiteren Senders, der sich im Empfangsbereich der Sende-/Empfangsvorrichtung (100) befindet. Die Sende-/Empfangsvorrichtung (100) weist ferner eine Einrichtung (120) zum Bereitstellen von Priorisierungsinformationen für den Sender des Mobilfunknetzes und den wenigstens einen weiteren Sender auf, wobei die Priorisierungsinformationen so ausgebildet sind, dass eine höhere Priorität zugeordnet wird für einen Sender, der eine genauere Lokalisierung der Sende-/Empfangsvorrichtung (100) erlaubt im Vergleich zu einem Sender, der eine ungenauere Lokalisierung der Sende-/Empfangsvorrichtung (100) erlaubt. Die Sende-/Empfangsvorrichtung (100) umfasst ferner eine Einrichtung (130) zum Auswählen von Lokalisierungsdaten des Senders, der eine höhere Priorität hat und eine Einrichtung (140) zum Senden der Lokalisierungsdaten oder einer aus den Lokalisierungsdaten bestimmten Position.

FIG.2

EP 1 937 020 A2

**Beschreibung**

Die vorliegende Erfindung bezieht sich auf die Lokalisierung von Mobilfunktelefonen bzw. Mobilfunkendgeräten in Mobilfunknetzwerken, insbesondere in Notfallsituationen.

Die Lokalisierung von Mobilfunktelefonen, insbesondere wenn diese nicht über einen eingebauten GPS-Empfänger (GPS = Global Positioning System) verfügen bzw. keine GPS-Abdeckung vorhanden ist, erfolgt in der konventionellen Technik durch Auswertung der Informationen, die durch die Verbindung der Mobilfunktelefone mit dem Mobilfunknetz und dessen Netzwerkinfrastruktur gewonnen werden können. Im Bereich der konventionellen Technik kann die Lokalisierung durch Auswertung einer Position eines Sendemastes einer Funkzelle vorgenommen werden, in die ein Mobilfunktelefon eingebucht ist. Manche Funkzellen sind durch sektorisierte Antennen gekennzeichnet, wobei in diesen Fällen das virtuelle Zentrum eines Sektors als Position des Mobilfunktelefons angegeben werden kann, in dem das Mobilfunktelefon eingebucht ist.

Diese Vorgehensweise erlaubt eine Positionsbestimmung eines Mobilfunktelefons, bzw. eines Mobilfunkendgerätes, nur mit einer eingeschränkten Genauigkeit. Dies ist insbesondere nachteilig in Situationen, in denen Notfälle auftreten und ein zeitnahes Eintreffen von Rettungskräften unabdinglich ist.

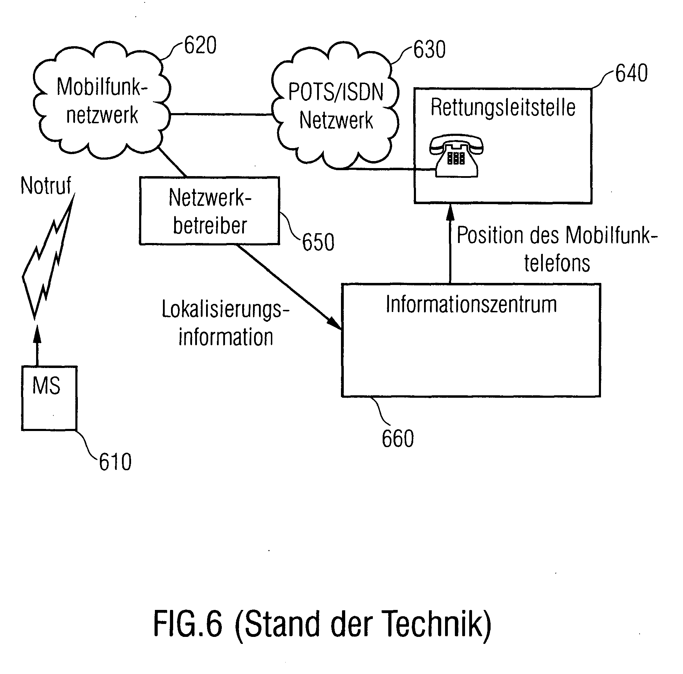

In der Fig. 6 ist ein Kommunikationsszenario in einer Notfallsituation beispielhaft dargestellt. Die Fig. 6 zeigt die Nutzung eines Lokalisierungsdienstes am Beispiel einer Alarmierung von Rettungsdiensten. In der Fig. 6 ist ein Mobilfunktelefon 610 (MS = Mobilstation) dargestellt, von dem aus ein Notruf (Emergency Call) ausgesendet wird, der über ein drahtloses Mobilfunknetz (PLM Network = Public Land Mobile Network) 620 und ein drahtgebundenes Netz 630, das durch ein POTS-Netzwerk (POTS = Plain Old Telephone Service bzw. Post Office Telephone Service) oder ein ISDN-Netzwerk (ISDN = Integrated Services Digital Network) realisiert sein kann, an eine Rettungsleitstelle 640 (Emergency Center) weitervermittelt wird. Durch eine Nutzung bisheriger konventioneller Location Services eines Netzwerkbetreibers 650 (PLMN Operator), wird eine Lokalisierungsinformation (Location Information from LBS, LBS = Location Based Services) an ein Informationszentrum 660 (IT-Center, IT = Information Technology) weitergegeben, das durch eine geeignete Software der Rettungsleitstelle 640 die berechnete Position des Mobilfunktelefons 610 auf einer Karte anzeigen kann (Location on Map), damit die Rettungskräfte an den richtigen Ort geleitet werden können.

Ein Nachteil der bisherigen Lösung ist die nur eingeschränkte Genauigkeit, mit der die Position eines Mobilfunktelefons oder Mobilfunkendgerätes bestimmt werden kann, so dass es zu Verzögerungen beim Einsatz der Rettungskräfte kommt, wobei dies gerade im Bereich der Notfälle schwerwiegende Konsequenzen nach sich ziehen kann.

Die DE 10345224 offenbart ein Verfahren zur Positionsschätzung einer Teilnehmerstation eines Funkkommunikationssystems, bei dem eine Empfangsstation von der Teilnehmerstation Berichte empfängt, die jeweils eine Information bezüglich einer Signalstärke eines Empfangssignals wenigstens einer sendenden Station am Ort der Teilnehmerstation enthalten. Die Berichte werden in einem Speicher einer Netzeinrichtung des Funkkommunikationssystems gespeichert und eine Positionsbestimmung berücksichtigt zumindest zwei vor der Aufforderung zur Positionsschätzung gespeicherte Berichte zur Positionsschätzung der Teilnehmerstation. Die Position der Teilnehmerstation kann dann durch Vergleich der Signalstärken mit einer Signalstärkendatenbank ermittelt werden. Das beschriebene Verfahren hat den Nachteil, dass die Position der Teilnehmerstation nur so genau bestimmt werden kann, wie es die Auflösung der Datenbank erlaubt. Ferner muss die Datenbank ausgemessen und gespeichert, bei Ausbau eines Netzes entsprechend aktualisiert werden. Eine Positionsbestimmung ist damit nur ungenau möglich.

Die WO 98/15149 offenbart ein Verfahren zur Positionsbestimmung einer Mobilstation in einem zellularen Netzwerk. Ein Netzwerkmanagementsystem empfängt dabei von einer Mobilstation Informationen über Feldstärkemessungen, die von der Mobilstation durchgeführt wurden. In einem nächsten Schritt werden die Feldstärkemessungen mit einer Feldstärkematrix verglichen, und die Position der Mobilstation, basierend auf den Koordinaten der Feldstärkematrix, zumindest in Relation zu der Basisstation, bei der die Mobilstation angemeldet ist und einer weiteren Basisstation, geschätzt. Dabei wird die Feldstärkemessung der Mobilstation möglichst genau an die Feldstärkeinformation in der Feldstärkematrix angepasst. Das hier beschriebene Verfahren hat den Nachteil, dass die Position nur ungenau bestimmt werden kann, da in der Feldstärkematrix nur Werte an bestimmten Orten vorliegen, die durch eine Messung ermittelt wurden. Ferner hat das beschriebene Verfahren den Nachteil, dass die Aktualisierung der Feldstärkematrix zusätzlichen Aufwand erzeugt.

Es ist die Aufgabe der vorliegenden Erfindung eine genauere und verbesserte Bestimmung einer Position eines Mobilfunkendgerätes zu ermöglichen, insbesondere in Notfallsituationen.

Die Aufgabe wird gelöst durch eine Sende-/Empfangsvorrichtung zur Kommunikation in einem Mobilfunknetzwerk gemäß Anspruch 1, durch ein Verfahren zur Kommunikation in einem Mobilfunknetzwerk gemäß Anspruch 17, durch ein Informationszentrum zum Bestimmen einer Position gemäß Anspruch 19 und ein Verfahren zum Bestimmen einer Position gemäß Anspruch 25.

Die Aufgabe wird gelöst durch eine Sende-/Empfangsvorrichtung zur Kommunikation in einem Mobilfunknetzwerk mit einer Einrichtung zum Erfassen von Signalen eines Senders des Mobilfunknetzwerkes und wenigstens eines weiteren Senders, der sich im Empfangsbereich der Sende-/Empfangsvorrichtung befindet. Die Sende-/Empfangsvorrichtung umfasst ferner eine Einrichtung zum Bereitstellen von Priorisierungsinformationen für den Sender des Mobilfunknetzwerks und wenigstens einen weiteren Sender, wobei die Priorisierungsinformationen so ausgebildet sind, dass eine höhere Priorität zugeordnet wird für einen Sender, der eine genauere Lokalisierung der Sende-/Empfangsvorrichtung erlaubt im Vergleich zu einem Sender, der eine ungenauere Lokalisierung der Sende-/Empfangsvorrichtung erlaubt. Die Sende-/Empfangsvorrichtung weist ferner eine Einrichtung zum Auswählen von Lokalisierungsdaten des Senders auf, der eine höhere Priorität hat. Ferner umfasst die Sende-/Empfangsvorrichtung eine Einrichtung zum Senden der Lokalisierungsdaten oder einer aus den Lokalisierungsdaten bestimmten Position.

Die Aufgabe wird gelöst durch ein Verfahren zur Kommunikation in einem Mobilfunknetzwerk, mit einem Schritt des Erfassens von Signalen eines Senders des Mobilfunknetzwerks und wenigstens eines weiteren Senders, der sich im Empfangsbereich einer Sende-/Empfangsvorrichtung befindet. Das Verfahren umfasst ferner einen Schritt des Bereitstellens von Priorisierungsinformationen für den Sender des Mobilfunknetzwerks und wenigstens einen weiteren Sender, wobei die Priorisierungsinformationen so ausgebildet sind, dass eine höhere Priorität zugeordnet wird für einen Sender, der eine genauere Lokalisierung der Sende-/Empfangsvorrichtung im Vergleich zu einem Sender, der eine ungenauere Lokalisierung der Sende-/Empfangsvorrichtung erlaubt. Das Verfahren umfasst ferner einen Schritt des Auswählens von Lokalisierungsdaten des Senders, der eine höhere Priorität hat und einen Schritt des Sendens der Lokalisierungsdaten oder einer aus den Lokalisierungsdaten bestimmten Position.

Die Aufgabe wird ferner gelöst durch ein Informationszentrum zum Bestimmen einer Position einer Sende-/Empfangsvorrichtung basierend auf Lokalisierungsdaten. Das Informationszentrum umfasst eine Einrichtung zum Empfangen der Lokalisierungsdaten und eine Einrichtung zum Überprüfen, ob zusätzliche Lokalisierungsdaten benötigt werden, wobei die Einrichtung zum Überprüfen ausgebildet ist, um mit den Lokalisierungsdaten einen Lokalisierungsversuch durchzuführen und um dann, wenn der Lokalisierungsversuch scheitert, zu entscheiden, dass zusätzliche Lokalisierungsdaten benötigt werden. Das Informationszentrum umfasst ferner eine Einrichtung zum Senden von Zusatzinformationen an die Sende-/Empfangsvorrichtung, wenn zusätzliche Lokalisierungsdaten benötigt werden und eine Einrichtung zum Bestimmen der Position der Sende-/Empfangsvorrichtung basierend auf den Lokalisierungsdaten oder den zusätzlichen Lokalisierungsdaten.

Die Aufgabe wird ferner gelöst durch ein Verfahren zum Bestimmen einer Position einer Sende-/Empfangsvorrichtung basierend auf Lokalisierungsdaten mit einem Schritt des Empfangens der Lokalisierungsdaten und einem Schritt des Überprüfens, ob zusätzliche Lokalisierungsdaten benötigt werden, wobei der Schritt des Überprüfens einen Unterschritt des Durchführens eines Lokalisierungsversuches umfasst, sowie einen Unterschritt des Entscheidens, dass zusätzliche Lokalisierungsdaten benötigt werden, wenn der Lokalisierungsversuch scheitert. Das Verfahren umfasst ferner einen Schritt des Sendens von Zusatzinformationen an die Sende-/Empfangsvorrichtung, wenn zusätzliche Lokalisierungsdaten benötigt werden und einen Schritt des Bestimmens der Position der Sende-/Empfangsvorrichtung basierend auf den Lokalisierungsdaten oder den zusätzlichen Lokalisierungsdaten.

Der Kerngedanke der vorliegenden Erfindung liegt darin, dass eine Sende-/Empfangsvorrichtung vielerlei Funkdaten, die zur Bestimmung einer Position dienlich sind, erfassen kann. Beispielsweise ist es möglich, Messungen an Basisstationen in verschiedenen Mobilfunknetzwerken durchzuführen, wie beispielsweise in GSM-Netzen (GSM = Global System for Mobile Communications), UMTS-Netzen (UMTS = Universal Mobile Telecommunication System), an WLAN-Hotspots (WLAN = Wireless Local Area Network) oder auch an Bluetooth-Sende-Empfängern. Ausführungsbeispiele der vorliegenden Erfindung nehmen an erfassten Daten, wie beispielsweise Feldstärken, Signallaufzeiten, Dämpfungen, Pfadverluste, absolute und relative Ortskoordinaten usw. eine Priorisierung vor. Dabei werden solche Funkdaten priorisiert, die eine genauere Bestimmung der Position einer Sende-/Empfangsvorrichtung zulassen. Dies ist insbesondere in Notfallsituationen sehr vorteilhaft, da dann eine genaue Bestimmung der Position notwendig ist, um Rettungskräfte möglichst schnell an den Ort des Notfalles zu bringen.

Ausführungsbeispiele der vorliegenden Erfindung sind deswegen ausgebildet, um Messwerte eines eigenen Mobilfunknetzwerkes zu erfassen, sowie auch solche anderer Mobilfunknetze, die beispielsweise bei anderen Frequenzen aktiv sind, oder andere Funktechnologien verwenden. Diese Daten werden dann entweder automatisch oder initiiert durch einen Teilnehmer an ein Informationszentrum übertragen, das die Daten dann auswertet. Beispielsweise könnte ein vermessener WLAN-Hotspot bzw. dessen IP-Adresse übertragen werden, und das Informationszentrum wäre dann in der Lage, den Ort dieses WLAN-Hotspots anhand der IP-Adresse zu identifizieren. In diesem Ausführungsbeispiel könnte aufgrund der geringen Reichweite des WLAN-Hotspots der Aufenthaltsort der Sende-/Empfangsvorrichtung relativ genau bestimmt werden. Ist das Informationszentrum nicht in der Lage die Orte der übermittelten Sender zu identifizieren, weil beispielsweise keine Möglichkeit besteht, einer bestimmten IP-Adresse einen Ort zuzuordnen oder Daten von Sendern mit unbekannten Positionen vorliegen, so hat das Informationszentrum die Möglichkeit Zusatzlokalisierungsdaten von der Sende-/Empfangsvorrichtung anzufordern, beziehungsweise neue Priorisierungen an die Sende-/Empfangsvorrichtung zu übermitteln.

Beispielsweise wird in Ausführungsbeispielen ein Sender mit geringerer Reichweite eine höhere Priorität zugeordnet. Es ist aber auch denkbar, dass in manchen Szenarien ein Sender mit einer höheren Reichweite bevorzugt wird, wenn dieser Sender z.B. in der Lage ist, eine genauere Positionsbestimmung durchzuführen als ein anderer Sender mit einer geringeren Reichweite, beispielsweise durch implementierte Konzepte zur Laufzeitmessung oder Richtungsbestimmung o. ä.

Es ist in weiteren Ausführungsbeispielen auch denkbar, dass die Sende-/Empfangsvorrichtung zum Beispiel über Bluetooth eine Verbindung mit einer anderen Sende-/Empfangsvorrichtung aufbaut, die zum Beispiel über einen GPS-Empfänger verfügt und ihre genauen Koordinaten mitteilen kann. Aufgrund der geringen Reichweite der Bluetooth-Verbindung, wäre dann bei einer entsprechenden Übermittlung dieser Koordinaten an das Informationszentrum eine sehr genaue Lokalisierung der Sende-/Empfangsvorrichtung möglich. Die Lokalisierungsdaten würden dann auch Informationen über die direkten Ortskoordinaten umfassen.

In Ausführungsbeispielen der vorliegenden Erfindung verfügt das Informationszentrum demnach über Informationen über mehrere Netzwerktopologien von verschiedenen Betreibern, verschiedenen Zugriffstechnologien und Funktechnologien, sowie eventuell über Informationen zusätzlicher stationärer oder auch mobiler terrestrischer Sender. In einem weiteren Ausführungsbeispiel wäre es denkbar, Mautbrücken zu detektieren, und in einem Notfall basierend auf den bereits passierten Mautbrücken einen Autobahnabschnitt zu ermitteln, in dem der Notruf gesendet wurde.

In Ausführungsbeispielen der vorliegenden Erfindung werden die Lokalisierungsdaten die von der Sende-/Empfangsvorrichtung bestimmt wurden über eine Datenverbindung an das Informationszentrum übermittelt. Diese Datenverbindung kann beispielsweise über eine Kurznachricht oder über mehrere Kurznachrichten realisiert sein. Besitzt die Sende-/Empfangsvorrichtung zum Beispiel Zugriff auf einen WLAN-Hotspot oder ist über eine andere Technologie bereits mit dem Internet verbunden, so wäre auch eine Übermittlung über das Internet, also das World Wide Web (www = World Wide Web), denkbar. Ferner ist es denkbar, dass die Sende-/Empfangsvorrichtung über andere Sende-/Empfangsvorrichtungen ein Ad-Hoc-Netzwerk oder ein Multi-Hop-Netzwerk aufbaut, um sowohl Lokalisierungsdaten zu erfassen als auch zu übermitteln.

Bevorzugte Ausführungsbeispiele der vorliegenden Erfindung werden nachfolgend anhand der beigelegten Zeichnungen im Detail beschrieben. Es zeigen:

Fig. 1a    ein Blockschaltbild eines Ausführungsbeispiels einer Sende-/Empfangsvorrichtung;

Fig. 1b    ein Blockschaltbild eines Ausführungsbeispiels eines Informationszentrums;

Fig. 2    ein schematisches Szenario zur Verdeutlichung der Positionsbestimmung gemäß einem Ausführungsbeispiel;

Fig. 3    ein weiteres schematisches Szenario zur Verdeutlichung der Positionsbestimmung gemäß einem anderen Ausführungsbeispiel;

Fig. 4    eine beispielhafte Darstellung verschiedener Empfangspegel;

Fig. 5    eine Tabelle, die eine Gewichtung verschiedner Empfangspegel in einem Ausführungsbeispiel der vorliegenden Erfindung verdeutlicht;

Fig. 6    ein schematisches Szenario zur Verdeutlichung einer Alarmierung einer Rettungsleitstelle in der konventionellen Technik.

Es wird an dieser Stelle darauf hingewiesen, dass in der folgenden Beschreibung die Begriffe Sende-/Empfänger, Mobilfunkendgerät, Mobilfunktelefon, Mobilfunkgerät, Teilnehmerstation und Mobilstation synonym verwendet werden und diese Begriffe ein mobiles Gerät bezeichnen, dessen Position bestimmt wird. Als Basisstation oder Basisstations-Sende-Empfänger wird allgemein eine Funkstation bezeichnet, die entweder fest in einer Netzwerkinfrastruktur installiert ist oder zumindest eine bekannte Position aufweist und mit einem Mobilfunkendgerät kommunizieren kann. In den im Folgenden beschriebenen Ausführungsbeispielen kann eine Basisstation oder ein Basisstations-Sende-Empfänger auch durch ein Mobilfunkendgerät realisiert sein, sofern dessen Position bekannt ist. Beispielsweise könnte dies ein Mobilfunkendgerät sein, das einen integrierten GPS-Empfänger aufweist oder mit einem solchen in seiner Nähe kommuniziert, z.B. in einem Kraftfahrzeug.

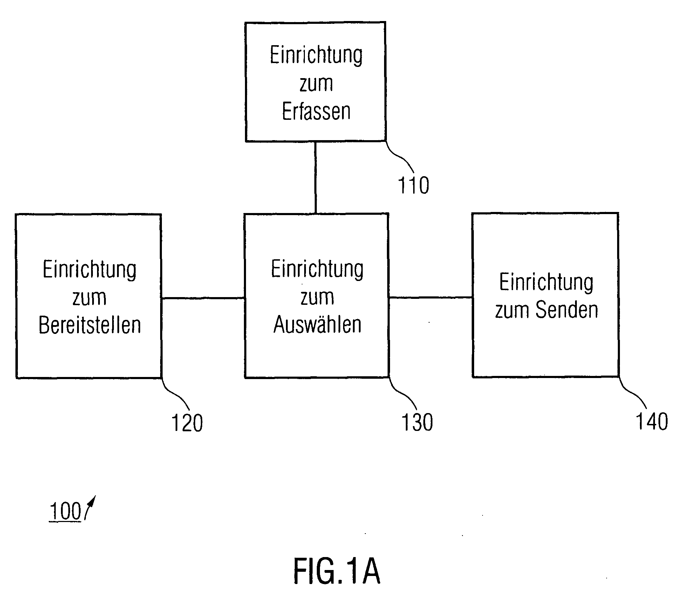

Die Fig. 1a zeigt ein Blockschaltbild eines Ausführungsbeispiels einer Sende-/Empfangsvorrichtung 100 zur Kommunikation in einem Mobilfunknetz. Die Sende-/Empfangsvorrichtung 100 umfasst eine Einrichtung 110 zum Erfassen von Signalen eines Senders des Mobilfunknetzwerkes und wenigstens eines weiteren Senders, der sich im Empfangsbereich der Sende-/Empfangsvorrichtung 100 befindet. Ferner umfasst die Sende-/Empfangsvorrichtung 100 eine Einrichtung 120 zum Bereitstellen von Priorisierungsinformationen für den Sender des Mobilfunknetzwerkes und den wenigstens einen weiteren Sender, wobei die Priorisierungsinformationen so ausgebildet sind, dass eine höhere Priorität zugeordnet wird für einen Sender, der eine genauere Lokalisierung der Sende-/Empfangsvorrichtung 100 erlaubt im Vergleich zu einem Sender, der eine ungenauere Lokalisierung der Sende-/Empfangsvorrichtung 100 erlaubt. Die Sende-/Empfangsvorrichtung 100 umfasst ferner eine Einrichtung 130 zum Auswählen von Lokalisierungsdaten des Senders, der eine höhere Priorität hat und umfasst ferner eine Einrichtung 140 zum Senden der Lokalisierungsdaten oder einer aus den Lokalisierungsdaten bestimmten Position.

In Ausführungsbeispielen der vorliegenden Erfindung kann die Einrichtung 110 zum Erfassen der Signale ausgebildet sein, um Signale aus einem Mobilfunknetz oder aus mehreren Mobilfunknetzen zu erfassen. Diese Signale können aus Mobilfunknetzen verschiedener Frequenz und auch verschiedener Zugriffstechnologien, wie beispielsweise aus GSM-Netzen, aus UMTS-Netzen, von WLAN-Hotspots oder von Bluetooth-Sende-Empfängern stammen. Ferner kann die Einrichtung 110 zum Erfassen der Signale dazu ausgebildet sein, um Signallaufzeiten oder Signallaufzeitunterschiede zu erfassen.

Konkret kann die Einrichtung 110 zum Erfassen der Signale in Ausführungsbeispielen ausgebildet sein, ein Signal nach einem Empfangspegel, einer Signallaufzeit, einer Feldstärke oder einer Dämpfung zwischen der Sende-/Empfangsvorrichtung 100 und dem Sender oder dem weiteren Sender zu erfassen. Ferner kann die Sende-/Empfangsvorrichtung 100 eine Einrichtung 110 zum Erfassen von Signalen aufweisen, die ausgebildet ist, um Signale von anderen Sende-/Empfangsvorrichtungen zu erfassen, die Lokalisierungsinformation implizit oder explizit enthalten. In Ausführungsbeispielen der vorliegenden Erfindung kann die Einrichtung 120 zum Bereitstellen der Priorisierungsinformationen ausgebildet sein, um einem Sender mit einer geringeren Reichweite eine höhere Priorität zuzuordnen im Vergleich zu einem Sender mit einer hohen Reichweite. In anderen Szenarien, beispielsweise wenn ein Sender oder ein Basisstations-Sende-Empfänger über spezielle Konzepte zur Positionsbestimmung, zur Laufzeitmessung oder Richtungsbestimmung verfügt, ist es auch möglich, einen Sender mit einer höheren Reichweite einem Sender mit einer geringeren Reichweite vorzuziehen, sofern durch diesen Sender oder mit Hilfe der Signale dieses Senders die Position der Sende-/Empfangsvorrichtung 100 genauer ermitteln werden kann.

Ferner kann die Einrichtung 120 zum Bereitstellen der Priorisierungsinformationen ausgebildet sein, um eine zusätzliche Informationen zu erhalten, die Priorisierungsinformationen aufweist, wobei die Sende-/Empfangsvorrichtung 100 ferner eine Einrichtung zum Empfangen von Zusatzinformationen aufweist. Dies kann insbesondere in Notfällen vorteilhaft sein, da eine Sende-/Empfangsvorrichtung beispielsweise Lokalisierungsdaten von Sendern an ein Informationszentrum übermitteln könnte, deren Position dem Informationszentrum nicht bekannt ist. Auf diese Art und Weise erhält ein Informationszentrum die Möglichkeit, diese Sender von den Lokalisierungsdaten auszuschließen, und so schließlich Lokalisierungsdaten zu erhalten, die eine genaue Bestimmung der Position ermöglichen.

In Ausführungsbeispielen kann die Einrichtung 130 zum Auswählen der Lokalisierungsdaten ausgebildet sein um Lokalisierungsdaten einer Mehrzahl von Sendern auszuwählen, die die jeweils höchsten Priorisierungen aufweisen. Ferner kann die Einrichtung 130 zum Auswählen der Lokalisierungsdaten ausgebildet sein, um zusätzlich in die Lokalisierungsdaten eines Senders Informationen über einen Empfangspegel, eine Feldstärke, eine Signallaufzeit, eine Dämpfung des Signals des Senders oder den Sender selbst einzufügen.

Die Einrichtung 140 zum Senden der Lokalisierungsdaten kann in Ausführungsbeispielen ausgebildet sein, um eine Datenverbindung zu einem Informationszentrum über das Mobilfunknetz, ein anderes Mobilfunknetz, ein beliebiges Netz, das World Wide Web oder über ein Ad-Hoc- bzw. Multi-Hop-Netzwerk aufzubauen. In einem anderen Ausführungsbeispiel wird die Datenverbindung über eine Kurznachricht oder mehrere Kurznachrichten realisiert.

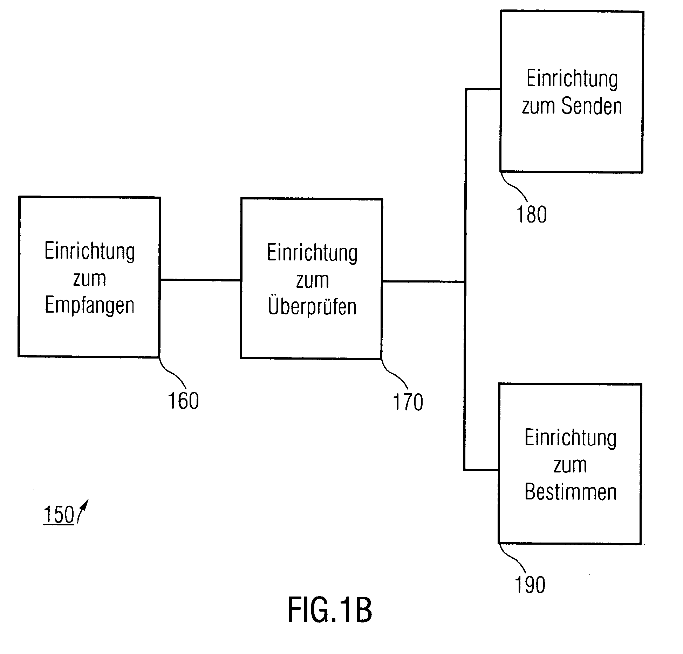

Fig. 1b zeigt ein Blockschaltbild eines Ausführungsbeispiels eines Informationszentrums 150. Das Informationszentrum 150 dient zum Bestimmen einer Position einer Sende-/Empfangsvorrichtung basierend auf Lokalisierungsdaten. Das Informationszentrum 150 umfasst eine Einrichtung 160 zum Empfangen der Lokalisierungsdaten und ferner eine Einrichtung 170 zum Überprüfen, ob zusätzliche Lokalisierungsdaten benötigt werden, wobei die Einrichtung zum Überprüfen 160 ausgebildet ist, um mit den Lokalisierungsdaten einen Lokalisierungsversuch durchzuführen und um dann, wenn der Lokalisierungsversuch scheitert, zu entscheiden, dass zusätzliche Lokalisierungsdaten benötigt werden. Das Informationszentrum 150 umfasst ferner eine Einrichtung 180 zum Senden von Zusatzinformationen an die Sende-/Empfangsvorrichtung, wenn zusätzliche Lokalisierungsdaten benötigt werden und weist ferner eine Einrichtung 190 zum Bestimmen der Position der Sende-/Empfangsvorrichtung auf, basierend auf den Lokalisierungsdaten oder den zusätzlichen Lokalisierungsdaten.

Die Lokalisierungsdaten können in Ausführungsbeispielen Identifikationsinformationen von Sendern aufweisen und die Einrichtung 170 zum Überprüfen der Lokalisierungsdaten kann angepasst sein, um die empfangenen Lokalisierungsdaten zu überprüfen, ob Positionen der durch die Identifikationsinformation referenzierten Sender verfügbar sind, um im Falle eines Scheiterns des Lokalisierungsversuches zu bestimmen, dass zusätzliche Lokalisierungsdaten benötigt werden, um letztendlich Lokalisierungsdaten zu erhalten, die eine genügend genaue Positionsbestimmung der Sende-/Empfangsvorrichtung ermöglichen.

Dies kann insbesondere in einem Notfall sehr wichtig sein, wenn eine Sende-/Empfangsvorrichtung Lokalisierungsdaten übermittelt, die zwar theoretisch eine genaue Position der Sende-/Empfangsvorrichtung erlauben, jedoch Positionen der in den Lokalisierungsdaten referenzierten Sender dem Informationszentrum nicht bekannt sind. In diesem Fall hat das Informationszentrum die Möglichkeit eine Nachricht an die Sende-/Empfangsvorrichtung zu übermitteln und Sender mit unbekannten Positionen von den Lokalisierungsdaten auszuschließen. Dies kann beispielsweise auch über eine Kurznachricht geschehen, wobei dann die Einrichtung 180 zum Senden ausgebildet ist, um die Zusatzinformation über eine Kurznachricht über die Sende-/Empfangsvorrichtung zu übertragen. Ferner kann in einem Ausführungsbeispiel die Einrichtung zum Senden 180 ausgebildet sein, um Priorisierungsinformationen zu senden, die Informationen über unbekannte Sender oder Informationen über Sender mit verfügbaren Positionen aufweisen.

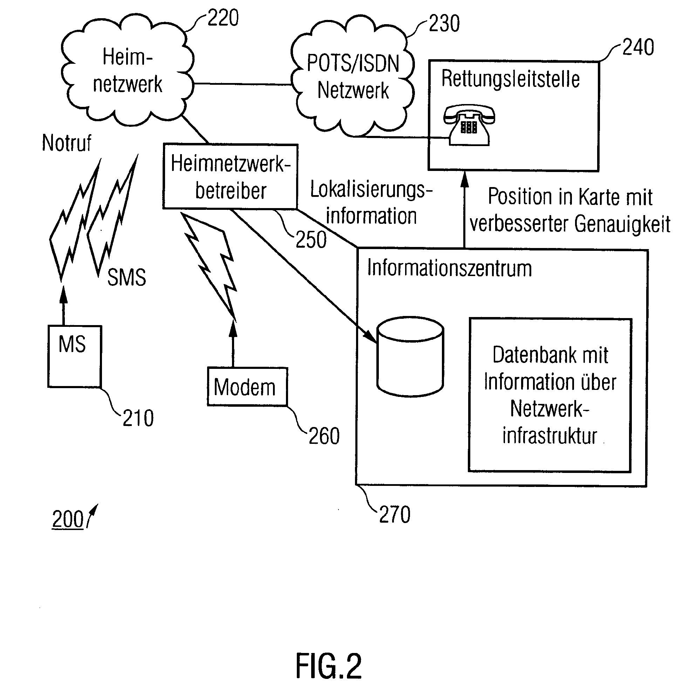

Fig. 2 zeigt eine schematische Darstellung eines Systems 200 zur Alarmierung von Rettungsdiensten gemäß einem Ausführungsbeispiel der vorliegenden Erfindung. Wie bereits anhand der Fig. 6 beschrieben initiiert ein Mobilfunkendgerät 210 einen Notruf (Emergency Call) in seinem Heimnetzwerk 220, welches hier beispielhaft als GSM-Netzwerk 220 angenommen ist. Prinzipiell sind anstatt des Heimnetzwerkes 220 auch andere Netzwerke denkbar, in die das Mobilfunkendgerät beispielsweise auch im Rahmen eines Roaming-Abkommens oder auch über IP (IP = Internet Protocol) eingebunden sein kann.

Zusätzlich zu dem aufgebauten Notruf (Emergency Call) sendet das Mobilfunktelefon oder Mobilfunkendgerät 210 Daten aus, beispielsweise in Form einer Nachricht, die die oben beschriebenen Werte enthält und die über eine SMS (Emergency SMS) realisiert sein kann. Der Notruf der Mobilstation 210 wird dann von deren Heimnetzwerk 220, oder dem Netz, in das die Mobilstation eingebucht ist, beispielsweise über ein weiteres Netzwerk 230, zum Beispiel POTS oder ISDN, an eine Rettungsleitstelle 240 (Emergency Center) weitergeleitet. Die vom Mobilfunkendgerät 210 ausgesendete Nachricht (Emergency SMS) wird über eine Datenverbindung an das Heimnetzwerk 220 übermittelt. Diese Nachricht kann beispielsweise eine oder mehrere Kurzmitteilungen (SMS) umfassen, die dann vom Heimnetzwerk 220 über den Heimnetzwerkbetreiber 250 und ggf. über ein geeignetes Sendeempfangsgerät 260 (Modem) an ein Informationszentrum 270 weitergeleitet wird bzw. werden. Das Informationszentrum (IT Center) verfügt in einer Datenbank über Informationen über die Netzinfrastruktur des Heimnetzwerkes 220 sowie über Infrastrukturen anderer Netze, die von anderen Netzwerkbetreibern betrieben werden, die auch über andere Technologien verwirklicht sein können. Die Datenbank im Informationszentrum wird in einem Ausführungsbeispiel regelmäßig von den verschiedenen Netzwerkbetreibern aktualisiert.

Die Informationen aus der Datenbank werden mit Hilfe der beispielsweise mittels einer Kurznachricht übertragenen Informationen ausgewertet, die Position kann dann bestimmt werden und auf einer Karte der Rettungsleitstelle 240 dargestellt werden. Das Mobilfunkendgerät kann dabei automatisch oder auch vom Teilnehmer initiiert, vor oder nach einem Notruf Einbuchvorgänge bei verschiedenen Basisstations-Sende-Empfängern von einem oder von verschiedenen Netzwerkbetreibern vornehmen, die im Notruffall möglich sind und diese zur Verbesserung der Genauigkeit der Positionsbestimmung des Mobilfunkendgerätes zur Verfügung stellen. Ferner kann in einem weiteren Ausführungsbeispiel der vorliegenden Erfindung das Mobilfunkendgerät ausgebildet sein, um sich falls möglich, in ein oder mehrere UMTS-Netze einzubuchen, sowie um Informationen über andere Netzwerke, wie beispielsweise von WLAN-Hotspots zu sammeln. Das Mobilfunkendgerät kann ferner Informationen über die jeweilige Netzwerkinfrastruktur sammeln, indem es beispielsweise über einen gewissen Zeitraum hinweg Informationen speichert.

Dabei kann das Mobilfunkendgerät dann solche Werte übermitteln, die aus der nahen Vergangenheit stammen und Auskunft geben können über Positionen, an denen sich das Mobilfunktelefon kurz vor dem Notruf befunden hat. Eine Begrenzung der Menge dieser Werte ist erfindungsgemäß nicht gegeben, wohl aber im Hinblick auf eine einfache Realisierung gegeben. Beispielsweise wäre es denkbar, dass ein Mobilfunkendgerät, dass in der Lage ist beispielsweise über Bluetooth eine Verbindung zu einem anderen Mobilfunkgerät aufzubauen, das über seine genaue Position verfügt und diese im Falle eines Notrufes übermitteln kann denkbar, dass das Mobilfunkendgerät aufgrund der eingeschränkten Reichweite der Bluetooth-Verbindung diese Koordinaten direkt an das Informationszentrum übermittelt.

Die Übermittlung der Informationen an ein Netzbetreiberunabhängiges Informationszentrum hat den Vorteil, dass die Informationen verschiedener Netzbetreiber zur Positionsbestimmung ausgenutzt werden können. Es lässt sich somit eine erhöhte Genauigkeit der Positionsbestimmung erzielen, da mehr Informationen über Netzwerkumgebungen und auch verschiedene Netzwerkinfrastrukturen zur Verfügung stehen, als dies bei einer herkömmlichen, nur auf einer Netzwerkinfrastruktur beruhenden Positionsbestimmung, der Fall wäre.

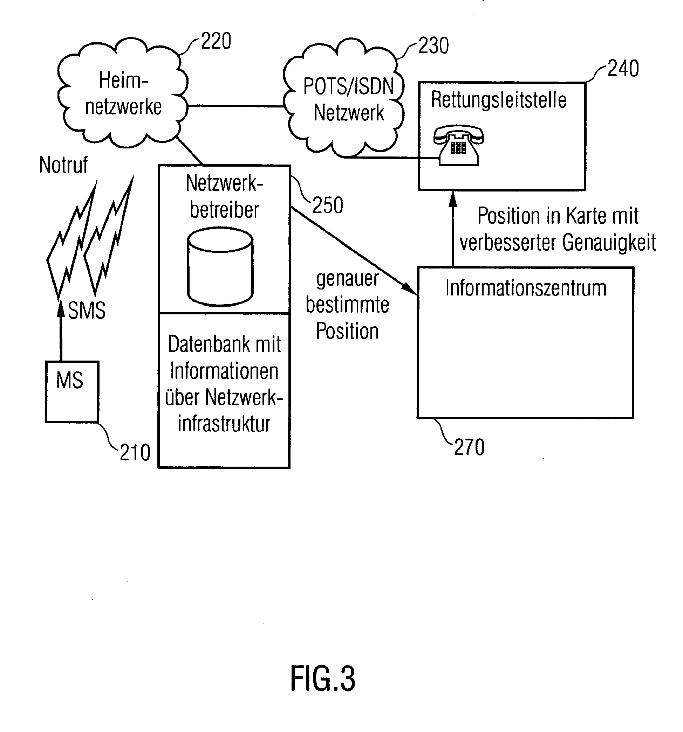

Alternativ kann jedoch die Bestimmung der Information auch vom Netzwerkbetreiber 250 übernommen werden, wie dies beispielhaft in der Fig. 3 dargestellt ist. Die Fig. 3 zeigt ein ähnliches Szenario wie bereits anhand der Fig. 2 beschrieben wurde, wobei gleiche Komponenten gleiche Bezugszeichen aufweisen. Der Unterschied des Szenarios in Fig. 3 im Vergleich zu dem Szenario, das in Fig. 2 dargestellt ist, ist, dass nun der Netzwerkbetreiber 250, der bereits über Informationen über seine eigene Netzinfrastruktur 220 verfügt, die ankommende Nachricht des Mobilfunkendgerätes 210 selbst auswertet und beispielsweise über Location Based Services (LBS) eine genauer bestimmte Position liefern kann, als das bisher der Fall war. In diesem Ausführungsbeispiel wird dann davon ausgegangen, dass der Netzwerkbetreiber Zugriff auf mehrere Netze hat bzw. mehrere Netze betreibt, um die von der Mobilstation 210 übermittelten Informationen entsprechend auswerten zu können.

Ausführungsbeispiele der vorliegenden Erfindung nutzen zur Positionsbestimmung eines Mobilfunkendgerätes Informationen, die dem Mobilfunkendgerät bekannt sind, bzw. von diesen bestimmt werden können und an eine geeigneten Stelle übermittelt werden, die über die Informationen der konventionellen Lokalisierungsverfahren hinausgehen. Die Informationen, die in Ausführungsbeispielen zur Bestimmung der Position eines Mobilfunkendgerätes genutzt werden können beispielsweise auch einen Wert eines Timings Advance in GSM-Netzen und TDD-UMTS-Netzen umfassen. Der Wert des Timing Advance (TA = Timing Advance) stellt in GSM-Netzen ein Maß für die Laufzeit des Signals von einem Basisstations-Sende-Empfänger oder BTS (BTS = Base Transceiver Station) zu einem Mobilfunkendgerät und zurück zur BTS in ganzen Bitperioden $T_b$ dar, wobei auf ganze Bitperioden gerundet wird. Mit 156,25 Bit in einem Zeitschlitz von 15/26ms, ergibt sich die Bitperiode zu

$$T_b = \frac{15ms}{26 \cdot 156,25} = \frac{30ms}{8125} \approx 3,69 \mu s \qquad (1)$$

Es wird angenommen, dass der effektive Abstand zwischen einem Basisstations-Sende-Empfänger und einem Mobilfunkendgerät d sei, es ergibt sich mit der Bitperiode $T_b$ und der Lichtgeschwindigkeit c = 3x10$^8$m/s für TA

$$TA = \left[ \frac{2 \cdot d}{c \cdot T_b} \right] \approx \left[ \frac{d}{554m} \right] \cdot \qquad (2)$$

Die eckige Klammer [ ] bedeutet hier, dass auf ganze Zahlen gerundet wird. Umgekehrt lässt sich aus TA der effektive Abstand

$$d \approx (TA + 0,5) \cdot 554m \qquad (3)$$

berechnen. Im Falle von GSM-Netzen beträgt die Ungenauigkeit der Quantisierung des TA etwa 277m. Für einen Timing Advance von TA = 1 folgt beispielsweise, dass sich das Mobilfunkendgerät in einem Abstand d von etwa 277m < d < 831m um den Basisstations-Sende-Empfänger befindet. Diese Werte werden beispielsweise durch Reflektionen und Beugungen der elektromagnetischen Wellen beeinflusst, so kann beispielsweise der Pfad einer elektromagnetischen Welle größer werden, als es dem tatsächlichen Abstand zwischen einem Mobilfunkendgerät und einer BTS entspricht, so dass der Abstand d im betrachteten Beispiel auch geringfügig kleiner als 277 m sein kann.

In TDD-UMTS-Netzen wird ein ähnlicher Wert ermittelt. Die Laufzeit der Funksignale zwischen einem Basisstations-Sende-Empfänger in FDD-UMTS-Netzen, in die ein Mobilfunkendgerät eingebucht ist, kann beispielsweise durch das folgende Verfahren bestimmt werden. Der Basisstations-Sende-Empfänger sendet ein erstes Funksignal und merkt sich, wann das erste Funksignal gesendet wurde. Die Mobilstation empfängt von diesem ersten Funksignal in der Regel mehrere durch Mehrwegeausbreitung hervorgerufene Echos zu unterschiedlichen Zeitpunkten. Das Mobilfunkendgerät sendet nach einer bestimmten Zeit $t_{TX-RX}$ eine Empfangsbestätigung an den Basisstations-Sende-Empfänger. Diese Zeitspanne, die zwischen dem Zeitpunkt des Empfangs des ersten Echos des ersten Funksignals bis zum Zeitpunkt des Sendens eines Referenzsignalwertes der Empfangsbestätigung liegt, kann gemessen werden. Die Empfangsbestätigung kann dann eine Information über den Wert von $t_{TX-RX}$ enthalten. Der Basisstations-Sende-Empfänger empfängt nun das Funksignal der Empfangsbestätigung durch in der Regel mehrere durch Mehrwegeausbreitung hervorgerufene Echos zu unterschiedlichen Zeitpunkten. Der Basisstations-Sende-Empfänger kann nun die Zeitdifferenz zwischen dem Empfang des ersten Echos des Referenzsignalwertes und dem Senden des ursprünglichen ersten Funksignals bestimmen. Die doppelte Laufzeit der Funksignale kann durch Abzug von $t_{TX-RX}$ ermittelt werden. Ferner kann in Ausführungsbeispielen der vorliegenden Erfindung die Laufzeit der Funksignale der Mobilfunkendgeräte durch ein weiteres Funksignal mitgeteilt werden, so dass dieses dem Mobilfunkendgerät dann vorliegt.

Ausführungsbeispiele der vorliegenden Erfindung berücksichtigen Empfangspegelmessungen zur Bestim-mung der Position eines Mobilfunkgerätes. Beispielsweise werden in GSM-Netzen in der Mobilstation empfangene Signalstärken, die als "RXLEV" bezeichnet werden, von bis zu sieben Basisstations-Sende-Empfängern (BTS) gemessen. Diese Signalstärken liegen in dem Mobilfunkendgerät als quantifizierte Werte vor und werden auch als RSSI (RSSI = Receiver Signal Strength Indicator) bezeichnet. Mit der logarithmischen Größe

$$p_e / dBm = 10 \cdot \lg(P_e / mW) \qquad\qquad (4)$$

der empfangenen Signalleistung $P_e$, gilt für den Zusammenhang zwischen Signalleistung und RSSI

$$RSSI = \begin{cases} \lceil 0 \rceil & , wenn\ p_e \leq -110 dBm \\ \lceil 110 + p_e / dBm \rceil & , wenn\ -110 dBm < p_e \leq -47 dBm \\ \lceil 63 \rceil & , wenn\ p_e > -47 dBm \end{cases} \qquad . \qquad (5)$$

Die unten geöffnete Klammer ⌐ ⌐ bezeichnet, dass der darin befindliche Wert aufgerundet werden soll. Beispielsweise bei RSSI = 62 liegt die logarithmische Empfangsleistung $p_e$ des Kontrollkanals BCCH (BCCH = Broadcast Control Channel) eines bedienenden Basisstations-Sende-Empfängers in einem Bereich zwischen -47dBm < $p_e$ ≤ -46dBm. Bei einer gleichverteilten Wahrscheinlichkeit ist in diesem Fall der Erwartungswert der logarithmischen Empfangsleistung zu $p_e$ = -46,5 dBm anzunehmen.

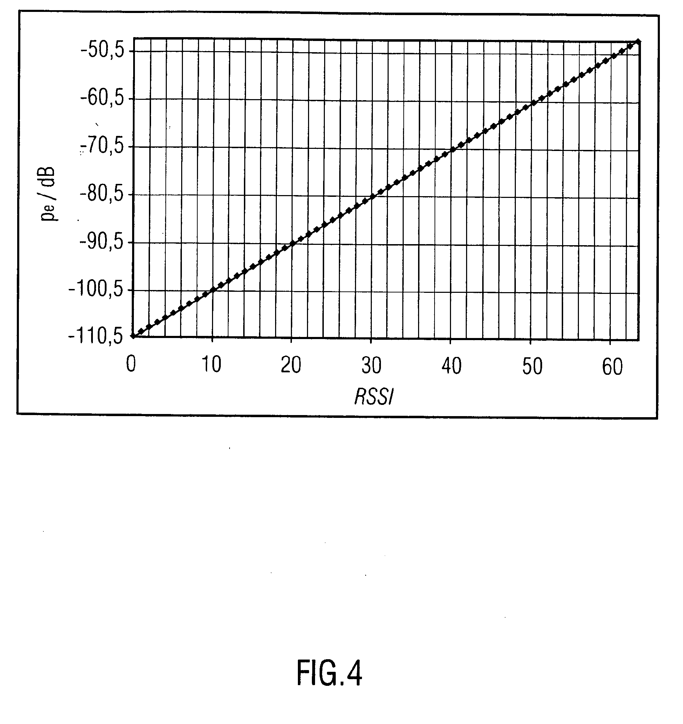

Die Fig. 4 zeigt beispielhaft eine Zuordnung zwischen Empfangsleistungen und RSSI, wobei in der Fig. 4 auf der Abzisse die RSSI-Werte aufgetragen sind und auf der Ordinate die logarithmische Empfangsleistung $p_e$ in dB. Die Fig. 4 zeigt eine lineare Zuordnung unter Verwendung der beschriebenen Skalen.

Auf Basis der bekannten Werte kann nun eine Position, beispielsweise nach zwei Raumrichtungen x und y ($x_{MS}$, $y_{MS}$) des Mobilfunkendgerätes aufgelöst, aus den Koordinaten der Basisstation ($x_{BTSi}$, $y_{BTSi}$) wie folgt bestimmt werden,

$$x_{MS} = \frac{1}{N_{BTS}} \sum_{i=1}^{N_{BTS}} g_{i,x} x_{BTSi}$$

$$, \qquad\qquad (6)$$

$$y_{MS} = \frac{1}{N_{BTS}} \sum_{i=1}^{N_{BTS}} g_{i,y} y_{BTSi}$$

wobei die $g_{i,x}$, $g_{i,y}$ die Gewichtungsfaktoren für die x- und y-Koordinaten eines i-ten Basisstations-Sende-Empfängers sind. Die Gewichtungsfaktoren können in einem Ausführungsbeispiel beispielsweise in dem Informationszentrum aus den von dem Mobilfunkendgerät ermittelten und übertragenen Daten bestimmt werden.

In einem Ausführungsbeispiel gilt für die Gewichtungen $g_{i,x}$ = $g_{i,y}$. In anderen Ausführungsbeispielen, zum Beispiel wenn das Mobilfunkendgerät Daten aus Regionen an den Grenzen eines Gebietes eines Netzbetreibers liefert oder z.B. an Küsten, etc., können die Gewichtungsfaktoren der einzelnen Raumrichtungen auch unterschiedlich gewählt werden.

In einem weiteren Ausführungsbeispiel sind alle Gewichtungsfaktoren $g_{i,x}$, $g_{i,y}$ gleich gewählt. Es wird somit der Schwerpunkt, der durch die Basisstations-Sende-Empfänger aufgebauten Fläche bestimmt mit $g_{i,x}$ = $g_{i,y}$ = 1.

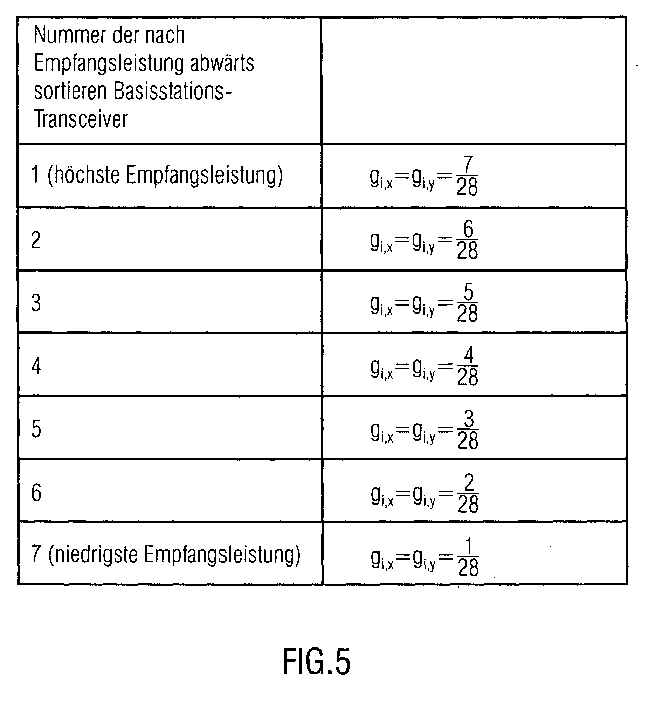

In einem weiteren Ausführungsbeispiel werden die Gewichtungsfaktoren $g_{i,x}$, $g_{i,y}$ beispielsweise in der Reihenfolge der Empfangspegel oder Empfangsleistungen abwärts mit konstanten Differenzen zwischen den einzelnen Gewichtungen gewählt. Fig. 5 zeigt ein Beispiel eines solchen Ausführungsbeispiels, bei dem davon ausgegangen wird, dass Empfangspegel von 7 Basisstations-Sende-Empfängern vorhanden sind. Die Tabelle in der Fig. 5 zeigt auf der linken Seite die Nummer der nach der Empfangsleistung oder des Empfangspegels abwärts sortierten Basisstations-Sende-Empfänger und in der rechten Spalte die zugehörigen Gewichtungsfaktoren. Erfindungsgemäß wählt dabei eine Sende-/Empfangsvorrichtung diejenigen sieben Basisstations-Sende-Empfänger, die die genaueste Bestimmung der Position der Sende-/Empfangsvorrichtung ermöglichen.

In einem anderen Ausführungsbeispiel können die Gewichtungsfaktoren auch aus den gemessenen Empfangsleistungen oder Empfangspegeln direkt bestimmt werden. Je nach zugrundegelegtem Ausbreitungsmodell, bedeutet eine Veränderung der Empfangsleistung um 1 dB eine Veränderung des Abstands zwischen Basisstations-Sende-Empfänger und Mobilfunkendgerät um den Faktor 1,06 bis 1,13. Das Ausbreitungsmodell und somit auch dieser Faktor können an das jeweilige Szenario entsprechend angepasst werden. Die Gewichtungsfaktoren der schwächer empfangbaren Basisstations-Sende-Empfänger werden dann um dasselbe Maß reduziert, wie deren Empfangspegel.

Unter in Bezugnahme eines Ausbreitungsmodells, lassen sich aus den daraus gewonnenen Vorhersagen für die Empfangspegel in der Umgebung der Basisstations-Sende-Empfänger Wahrscheinlichkeitsdichten bestimmen, mit der sich ein Mobilfunkendgerät an einer bestimmten Stelle befindet. Aus Überlagerung der Wahrscheinlichkeitsdichten der einzelnen, durch das Mobilfunkendgerät empfangbaren Basisstations-Sende-Empfängern, kann die gesuchte Position des Mobilfunkendgerätes in einem anderen Ausführungsbeispiel ermittelt werden.

Wenn die Mobilstation oder das Mobilfunkendgerät Informationen über in der Vergangenheit liegende Messwerte liefert, kann für jeden zurückliegenden Zeitpunkt, für den Empfangspegelmessungen vorliegen, die Position der Mobilstation bestimmt werden. Wegen der zu erwartenden niedrigen Bewegungsgeschwindigkeit eines Mobilfunkendgerätes werden die wahren Positionen zeitlich benachbarter Empfangspegelmessungen nicht weit auseinander liegen. Durch eine geeignete Mittelwertbildung der berechneten Positionen, unter Berücksichtigung der Bestimmung einer Bewegungsgeschwindigkeit lässt sich die wahre Position in einem weiteren Ausführungsbeispiel genauer ermitteln, als wenn nur ein Satz von Empfangspegelmessungen zu einem Zeitpunkt ausgewertet wird.

Andere Ausführungsbeispiele erzielen eine zusätzliche Erhöhung der Genauigkeit, wenn lediglich eine Positionsbestimmung relativ zu einer bekannten Position vorgenommen wird, zu der entsprechende Empfangspegelmesswerte des Mobilfunkendgerätes vorliegen. Wahlweise kann das Mobilfunkendgerät in einem solchen Ausführungsbeispiel auch Empfangspegeländerungen übertragen, wie bereits oben erwähnt.

Ausführungsbeispiele der vorliegenden Erfindung bieten somit den Vorteil, dass eine Position eines Mobilfunkendgerätes innerhalb der Mobilfunknetze genauer bestimmt werden kann, und schaffen somit insbesondere in einer Notfallsituation den Vorteil, dass Rettungskräfte schneller an ihren Einsatzort gelangen.

Insbesondere wird darauf hingewiesen, dass abhängig von den Gegebenheiten das erfindungsgemäße Schema auch in Software implementiert werden kann. Die Implementation kann auf einem digitalen Speichermedium, insbesondere einer Diskette, einer CD oder einer DVD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. Mit anderen Worten ausgedrückt, kann die Erfindung somit als ein Computerprogramm mit einem Programmcode zur Durchführung des Verfahrens realisiert werden, wenn das Computerprogrammprodukt auf einen Computer abläuft.

Bezugszeichenliste

| | |
|---|---|
| 100 | Sende-/Empfangsvorrichtung |
| 110 | Einrichtung zum Erfassen |
| 120 | Einrichtung zum Bereitstellen |
| 130 | Einrichtung zum Auswählen |
| 140 | Einrichtung zum Senden |
| 150 | Informationszentrum |
| 160 | Einrichtung zum Empfangen |
| 170 | Einrichtung zum Überprüfen |
| 180 | Einrichtung zum Senden |
| 190 | Einrichtung zum Bestimmen |
| | |
| 200 | System |
| 210 | Mobilstation |
| 220 | Heimnetzwerk |
| 230 | POTS/ISDN |
| 240 | Rettungsleitstelle |
| 250 | Heimnetzwerkbetreiber |
| 260 | Modem |
| 270 | Informationszentrum |

| 610 | Mobilstation |
| 620 | PLMN |
| 630 | POTS/ISDN |
| 640 | Emergency Center |
| 650 | PLMN-Operator |
| 660 | Informationszentrum |

**Patentansprüche**

1. Sende-/Empfangsvorrichtung (100) zur Kommunikation in einem Mobilfunknetz, mit folgenden Merkmalen:

   einer Einrichtung (160) zum Erfassen von Signalen eines Senders des Mobilfunknetzwerkes und wenigstens eines weiteren Senders, der sich im Empfangsbereich der Sende-/Empfangsvorrichtung (100) befindet;
   einer Einrichtung (120) zum Bereitstellen von Priorisierungsinformationen für den Sender des Mobilfunknetzwerkes und wenigstens einen weiteren Sender, wobei die Priorisierungsinformationen so ausgebildet sind, dass eine höhere Priorität zugeordnet wird für einen Sender, der eine genauere Lokalisierung der Sende-/Empfangsvorrichtung (100) erlaubt im Vergleich zu einem Sender, der eine ungenauere Lokalisierung der Sende-/Empfangsvorrichtung (100) erlaubt;
   einer Einrichtung (130) zum Auswählen von Lokalisierungsdaten des Senders, der höhere Priorität hat; und
   einer Einrichtung (140) zum Senden der Lokalisierungsdaten oder einer aus den Lokalisierungsdaten bestimmten Position.

2. Sende-/Empfangsvorrichtung (100) gemäß Anspruch 1, bei der die Einrichtung (110) zum Erfassen der Signale ausgebildet ist, um Signale des weiteren Senders in dem Mobilfunknetzwerk zu erfassen.

3. Sende-/Empfangsvorrichtung (100) gemäß einem der Ansprüche 1 oder 2, bei der die Einrichtung (110) zum Erfassen der Signale ausgebildet ist, um Signale des weiteren Senders eines anderen Mobilfunknetzwerkes zu erfassen.

4. Sende-/Empfangsvorrichtung (100) gemäß einem der Ansprüche 1 bis 3, bei der die Einrichtung (110) zum Erfassen der Signale ausgebildet ist, um Signale des weiteren Senders bei einer anderen Frequenz zu erfassen, als die Signale des Senders des Mobilfunknetzwerkes.

5. Sende-/Empfangsvorrichtung (100) gemäß einem der Ansprüche 1 bis 4, bei der die Einrichtung (110) zum Erfassen der Signale ausgebildet ist, um Signale des Senders oder des weiteren Senders aus einem GSM-Netz, einem UMTS-Netz, von einem WLAN-Access Point/Hotspot oder von einem Bluetooth-Sender zu erfassen.

6. Sende-/Empfangsvorrichtung (100) gemäß einem der Ansprüche 1 bis 5, bei der die Einrichtung (110) zum Erfassen der Signale ausgebildet ist, um ein Signal gemäß einem Empfangspegel, einer Signallaufzeit, einer Feldstärke oder einer Dämpfung zwischen der Sende-/Empfangsvorrichtung (100) und dem Sender oder dem weiteren Sender zu erfassen.

7. Sende-/Empfangsvorrichtung (100) gemäß einem der Ansprüche 1 bis 6, bei der die Einrichtung (110) zum Erfassen der Signale ausgebildet ist, um Signale von anderen Sende-/Empfangsvorrichtungen zu erfassen.

8. Sende-/Empfangsvorrichtung (100) gemäß einem der Ansprüche 1 bis 7, bei der die Einrichtung (110) zum Erfassen der Signale ausgebildet ist, um aus den erfassten Signalen Lokalisierungsdaten des Senders oder des weiteren Senders abzuleiten.

9. Sende-/Empfangsvorrichtung (100) gemäß einem der Ansprüche 1 bis 8, bei der die Einrichtung (120) zum Bereitstellen der Priorisierungsinformationen ausgebildet ist, um einen Sender mit einer geringeren Reichweite eine höhere Priorität zuzuordnen, im Vergleich zu einem Sender mit einer hohen Reichweite.

10. Sende-/Empfangsvorrichtung (100) gemäß einem der Ansprüche 1 bis 9, bei der die Einrichtung (120) zum Bereitstellen der Priorisierungsinformationen ausgebildet ist, um eine Zusatzinformation zu erhalten, die Priorisierungsinformationen aufweist und wobei die Sende-/Empfangsvorrichtung (100) ferner eine Einrichtung zum Empfangen von Zusatzinformationen aufweist.

**11.** Sende-/Empfangsvorrichtung (100) gemäß einem der Ansprüche 1 bis 10, bei der die Einrichtung (130) zum Auswählen der Lokalisierungsdaten ausgebildet ist, um Lokalisierungsdaten einer Mehrzahl von Sendern auszuwählen, die die höchsten Priorisierungen aufweisen.

**12.** Sende-/Empfangsvorrichtung (100) gemäß einem der Ansprüche 1 bis 11, bei der die Einrichtung (130) zum Auswählen der Lokalisierungsdaten ausgebildet ist, um in die Lokalisierungsdaten Informationen über einen Empfangspegel, eine Feldstärke, eine Signallaufzeit, eine Dämpfung des Signals oder eine Senderidentifikation des Senders oder des weiteren Senders einzufügen.

**13.** Sende-/Empfangsvorrichtung (100) gemäß einem der Ansprüche 1 bis 12, bei der die Einrichtung (140) zum Senden der Lokalisierungsdaten ausgebildet ist, um eine Datenverbindung zu einem Informationszentrum über das Mobilfunknetzwerk, ein weiteres Mobilfunknetzwerk, das Internet, ein Ad-Hoc-Netzwerk oder Multi-Hop-Netzwerk aufzubauen.

**14.** Sende-/Empfangsvorrichtung (100) gemäß einem der Ansprüche 1 bis 13, bei der die Einrichtung (140) zum Senden der Lokalisierungsdaten ausgebildet ist, um eine Kurznachricht oder mehrere Kurznachrichten mit den Lokalisierungsdaten oder einer aus den Lokalisierungsdaten bestimmten Position zu senden.

**15.** Sende-/Empfangsvorrichtung (100) gemäß einem der Ansprüche 1 bis 14, die ferner eine Einrichtung zum Liefern von Empfangspegelmessungen einer Mehrzahl von Basisstations-Sende-Empfängern aufweist, wobei ein Basisstations-Sende-Empfänger eine Basisstations-Sende-Empfänger-Position aufweist und die ferner eine Einrichtung zum Bestimmen der Position der Sende-/Empfangsvorrichtung (100) umfasst, basierend auf einer Kombination der Basisstations-Sende-Empfänger-Positionen.

**16.** Sende-/Empfangsvorrichtung (100) gemäß einem der Ansprüche 1 bis 15, die ferner einer Einrichtung zum Detektieren einer Notfallsituation aufweist;
eine Einrichtung zum Bereitstellen von Notfalldaten umfasst, die von einer geografischen Position der Sende-/Empfangsvorrichtung (100) abhängen, wobei die Einrichtung zum Bereitstellen ausgebildet ist, um unabhängig von einer detektierten Notfallsituation die Notfalldaten zu erfassen und zu aktualisieren, oder um ansprechend auf eine detektierte Notfallsituation die Notfalldaten zu erfassen;
und wobei die Sende-/Empfangsvorrichtung (100) ferner eine Einrichtung zum Aufbauen einer Datenverbindung zu einem Informationszentrum aufweist, die ausgebildet ist, um ansprechend auf eine detektierte Notfallsituation die Datenverbindung aufzubauen;
und wobei die Sende-/Empfangsvorrichtung (100) eine Einrichtung zum Übermitteln der Notfalldaten umfasst, die von der Einrichtung zum Bereitstellen der Notfalldaten bereitgestellt werden, über die Datenverbindung an das Informationszentrum.

**17.** Verfahren zur Kommunikation in einem Mobilfunknetz, mit folgenden Schritten:

Erfassen von Signalen eines Senders des Mobilfunknetzes und wenigstens eines weiteren Senders, der sich im Empfangsbereich einer Sende-/Empfangsvorrichtung befindet;
Bereitstellen von Priorisierungsinformationen für den Sender des Mobilfunknetzes und den wenigstens einen weiteren Sender, wobei die Priorisierungsinformationen so ausgebildet sind, dass eine höhere Priorität zugeordnet wird für einen Sender, der eine genauere Lokalisierung der Sende-/Empfangsvorrichtung im Vergleich zu einem Sender der eine ungenauere Lokalisierung der Sende-/Empfangsvorrichtung erlaubt;
Auswählen von Lokalisierungsdaten des Senders, der eine höhere Priorität hat; und
Senden der Lokalisierungsdaten oder einer aus den Lokalisierungsdaten bestimmten Position.

**18.** Computerprogramm zur Durchführung des Verfahrens gemäß Anspruch 17, wenn das Computerprogramm auf einem Computer ausgeführt wird.

**19.** Informationszentrum (150) zum Bestimmen einer Position einer Sende-/Empfangsvorrichtung basierend auf Lokalisierungsdaten, mit folgenden Merkmalen:

eine Einrichtung (160) zum Empfangen der Lokalisierungsdaten;
eine Einrichtung (170) zum Überprüfen, ob zusätzliche Lokalisierungsdaten benötigt werden, wobei die Einrichtung (170) zum Überprüfen ausgebildet ist, um mit den Lokalisierungsdaten einen Lokalisierungsversuch durchzuführen, um dann, wenn der Lokalisierungsversuch scheitert, zu entscheiden, dass zusätzliche Lokalisierungsdaten benötigt werden;

eine Einrichtung (180) zum Senden von Zusatzinformationen an die Sende-/Empfangsvorrichtung, wenn zusätzliche Lokalisierungsdaten benötigt werden;

eine Einrichtung (190) zum Bestimmen der Position der Sende-/Empfangsvorrichtung basierend auf den Lokalisierungsdaten oder den zusätzlichen Lokalisierungsdaten.

20. Informationszentrum (150) gemäß Anspruch 19, bei dem die Einrichtung (180) zum Senden ausgebildet ist, um Zusatzinformationen, die Priorisierungsinformationen aufweisen, zu senden.

21. Informationszentrum (150) gemäß einem der Ansprüche 19 oder 20, wobei die Lokalisierungsdaten Identifikationsinformationen von Sendern aufweisen und wobei die Einrichtung (170) zum Überprüfen ausgebildet ist, um die empfangenen Lokalisierungsdaten zu überprüfen, ob Positionen der durch die Identifikationsinformation referenzierten Sender verfügbar sind, und ein Scheitern des Lokalisierungsversuches zu bestimmen, wenn die Positionen nicht verfügbar sind.

22. Informationszentrum (150) gemäß einem der Ansprüche 19 bis 21, bei dem die Einrichtung (180) zum Senden ausgebildet ist, um die Zusatzinformation über eine Kurznachricht an die Sende-/Empfangsvorrichtung zu senden.

23. Informationszentrum (150) gemäß einem der Ansprüche 19 bis 22, bei dem die Einrichtung (190) ferner eine Einrichtung zum Liefern von Empfangspegelmessungen einer Mehrzahl von Basisstations-Sende-Empfängern aufweist, wobei ein Basisstations-Sende-Empfänger eine Basisstations-Sende-Empfänger-Position aufweist, und wobei die Einrichtung (190) zum Bestimmen der Position ferner eine Einrichtung zum Bestimmen der Position der Sende-/Empfangsvorrichtung basierend auf einer Kombination der Basisstations-Sende-Empfänger-Positionen aufweist.

24. Informationszentrum (150) gemäß einem der Ansprüche 19 bis 23, bei dem die Einrichtung (180) zum Senden ausgebildet ist, um Priorisierungsinformation zu senden, die Information über unbekannte Sender oder Informationen über Sender mit verfügbaren Positionen aufweist.

25. Verfahren zum Bestimmen einer Position einer Sende-/Empfangsvorrichtung basierend auf Lokalisierungsdaten mit folgenden Schritten:

Empfangen der Lokalisierungsdaten;

Überprüfen ob zusätzliche Lokalisierungsdaten benötigt werden, wobei das Überprüfen der Lokalisierungsdaten einen Unterschritt des Durchführens eines Lokalisierungsversuches umfasst, und einen Unterschritt des Entscheidens, dass zusätzliche Lokalisierungsdaten benötigt werden, falls der Lokalisierungsversuch scheitert;

Senden von Zusatzinformationen an die Sende-/Empfangsvorrichtung, wenn zusätzliche Lokalisierungsdaten benötigt werden;

Bestimmen der Position der Sende-/Empfangsvorrichtung basierend auf den Lokalisierungsdaten oder den zusätzlichen Lokalisierungsdaten.

26. Computerprogramm mit einem Programmcode zur Durchführung des Verfahrens gemäß Anspruch 25, wenn das Computerprogramm auf einem Computer ausgeführt wird.

Einrichtung
zum
Erfassen

110

Einrichtung
zum
Bereitstellen

Einrichtung
zum
Auswählen

Einrichtung
zum Senden

120

130

140

100

FIG.1A

Einrichtung zum Senden

180

Einrichtung zum Empfangen

160

Einrichtung zum Überprüfen

170

Einrichtung zum Bestimmen

190

150

FIG.1B

FIG.2

FIG.3

FIG.4

| Nummer der nach Empfangsleistung abwärts sortieren Basisstations-Transceiver | |
|---|---|
| 1 (höchste Empfangsleistung) | $g_{i,x} = g_{i,y} = \dfrac{7}{28}$ |
| 2 | $g_{i,x} = g_{i,y} = \dfrac{6}{28}$ |
| 3 | $g_{i,x} = g_{i,y} = \dfrac{5}{28}$ |
| 4 | $g_{i,x} = g_{i,y} = \dfrac{4}{28}$ |
| 5 | $g_{i,x} = g_{i,y} = \dfrac{3}{28}$ |
| 6 | $g_{i,x} = g_{i,y} = \dfrac{2}{28}$ |
| 7 (niedrigste Empfangsleistung) | $g_{i,x} = g_{i,y} = \dfrac{1}{28}$ |

FIG.5

FIG.6 (Stand der Technik)

**IN DER BESCHREIBUNG AUFGEFÜHRTE DOKUMENTE**

**In der Beschreibung aufgeführte Patentdokumente**

- DE 10345224

- WO 9815149 A